# EUROPÄISCHE PATENTANMELDUNG

(11) **EP 0 949 122 A2**
(43) Veröffentlichungstag der Anmeldung: **13.10.1999**
(21) Anmeldenummer: 99105064.2
(22) Anmeldetag: 23.03.1999
(51) Int. Cl.: B60R 16/02

(54) **Für ein Kraftfahrzeug bestimmte Diagnose-Einrichtung und Verfahren zur Verminderung des Reparaturaufwandes bei Kraftfahrzeugen**

(30) Priorität: 09.04.1998 DE 19816113; 15.01.1999 DE 19901312
(71) Anmelder: Mannesmann VDO Aktiengesellschaft, 60388 Frankfurt am Main (DE)
(72) Erfinder: Möll, Winfried, 35321 Laubach (DE)
(74) Vertreter: Klein, Thomas, Dipl.-Ing.

(57) **Zusammenfassung**

Bei einer für ein Kraftfahrzeug bestimmten, einen Mikroprozessor (9) aufweisenden Diagnose-Einrichtung ist der Mikroprozessor (9) zum Auslesen von Fehlermeldungen in Fehlerspeichern elektronischer Steuerungen (3, 4) des Kraftfahrzeugs und zum Erzeugen einer Fehlerdiagnose auf dem Display (10) ausgebildet. Dadurch kann eine tiefgehende Fehlerdiagnose auch außerhalb der Werkstatt und ohne externe Zusatzgeräte erfolgen.

## Beschreibung

Die Erfindung betrifft eine für ein Kraftfahrzeug bestimmte, einen Mikroprozessor aufweisende Diagnose-Einrichtung, welche zur Anzeige von im Fahrzeug auftretenden Fehlern auf einem Display mit zu überwachenden Bauteilen Verbindung hat. Weiterhin betrifft die Erfindung ein Verfahren zur Verminderung des Reparaturaufwandes bei Kraftfahrzeugen, bei welchen ein für ihren weiteren Gebrauch relevanter Fehler aufgetreten ist.

Heutige Kraftfahrzeuge sind oftmals mit einer aufwendigen Diagnose-Einrichtung ausgestattet, welche es Werkstätten ermöglicht, ein Diagnosegerät mit dem Kraftfahrzeug zu verbinden, um auf einem Display des Diagnosegerätes Fehlermeldungen erkennen zu können. Für eine solche Diagnose-Einrichtung haben verschiedene Steuergeräte des Kraftfahrzeugs, beispielsweise ein Motorsteuergerät oder ein Airbag-Steuergerät, einen Fehlerspeicher, der üblicherweise Teil eines nicht flüchtigen Speichers ist. Das Steuergerät erhält über verschiedene Sensoren Informationen und erzeugt eine Fehlermeldung, falls durch die Informationsverarbeitung mittels eines Mikroprozessors des Steuergerätes auf einen Fehler geschlossen wird. Diese Fehlermeldung wird vorgenanntem Fehlerspeicher zugeführt und in diesem abgespeichert. Das Diagnosegerät vermag den Fehlerspeicher auszulesen und deshalb die Fehlermeldungen anzuzeigen.

Die bekannte Diagnose-Einrichtung erfordert seitens der die Diagnose durchführenden Werkstatt ein Diagnosegerät mit einem Mikroprozessor und einem Display. Es ist jedoch wünschenswert, dass ohne Hilfe eines externen Gerätes bei einem in Fahrt befindlichen oder liegengebliebenen Fahrzeug eine möglichst weitgehende Fehlerdiagnose möglich ist. Erste Schritte in dieser Richtung sind bereits gemacht. Beispielsweise sind Kombi-Instrumente mit einem Fehleranzeigedisplay bekannt, auf denen bestimmte Fehlermeldungen wie zum Beispiel "Bremsbeläge erneuern" oder "Schlusslicht ausgefallen" erscheinen. Solche Fehlermeldungen werden aufgrund von Signalen einzelner Sensoren erzeugt, welche mit einem einfachen Prozessor des Displays verbunden sind. Eine in die Tiefe gehende Fehlerdiagnose ist mit einem solchen System aus Kostengründen nicht möglich, weil hierzu eine Vielzahl von zusätzlichen Sensoren installiert werden müssten.

Der Erfindung liegt das Problem zugrunde, eine für ein Kraftfahrzeug bestimmte, einen Mikroprozessor aufweisende Diagnose-Einrichtung so auszubilden, dass mit möglichst geringem Aufwand eine möglichst weitgehende Fehlerdiagnose möglich wird. Weiterhin soll ein Verfahren zur Verminderung des Reparaturaufwandes bei Kraftfahrzeugen geschaffen werden, bei welchen ein für ihren weiteren Gebrauch relevanter Fehler aufgetreten ist.

Das erstgenannte Problem wird erfindungsgemäß dadurch gelöst, dass der Mikropozessor zum Auslesen von Fehlermeldungen in Fehlerspeichern elektronischer Steuerungen und Einrichtungen des Kraftfahrzeugs und zum Erzeugen einer Fehlerdiagnose auf dem Display ausgebildet ist.

Durch eine solche Diagnose-Einrichtung erhält der Fahrer im Falle eines Fehlers eine weitgehende Fehlerdiagnose, ohne dass hierfür zusätzliche Sensoren für die Überwachung installiert werden müssen. Da die erfindungsgemäße Diagnose-Einrichtung die Fehlerdaten aus den Fehlerspeichern der elektronischen Steuerungen und Einrichtungen ausliest, kann sie die für die jeweiligen Steuerungen und Einrichtungen ohnehin vorhandenen Sensoren mitbenutzen. Diese Art der Fehlerdiagnose ermöglicht weiterhin Fehler im Vorfeld zu erkennen und dem Fahrer einen vorzeitigen Werkstattaufenthalt oder Service mitzuteilen. Eine Verlängerung des Service-Intervalls bis zu einem Auftreten für den Service relevanter Fehlermeldungen ist damit ebenfalls möglich. Grundsätzlich ist eine codierte oder uncodierte Ausgabe der Fehlermeldung denkbar. Jedoch hilft eine codierte Ausgabe, die nur von geschultem Service-Personal verstanden werden kann, unsachgemäße Reparaturen zu vermeiden.

Man könnte zur Verwirklichung der Erfindung in der Armaturentafel die erfindungsgemäße Diagnose-Einrichtung als zusätzliches Bauteil anordnen. In diesem Fall wird ein Gerät mit einem Mikroprozessor zum Auslesen der Fehlermeldungen und einem Display zur Anzeige dieser Meldungen sowie eine Verbindung zu einer im Fahrzeug befindlichen Diagnoseleitung bzw. einem Netzwerk (z. B. K, CAN, J 1850) benötigt. Dieser Aufwand kann jedoch wesentlich vermindert werden, wenn gemäß einer besonders vorteilhaften Weiterbildung der Erfindung die Diagnose-Einrichtung ein die Geschwindigkeitsanzeige aufweisendes Kombi-Instrument ist. Hierdurch kann man den in heutigen Kombi-Instrumenten ohnehin vorhandenen und ausreichend leistungsfähigen Mikroprozessor für die erfindungsgemäße Diagnose-Einrichtung mitbenutzen. Auch steht oftmals bei Kombi-Instrumenten ein Display für die Visualisierung von Warnhinweisen oder eines Wegstreckenzählers zur Verfügung, welches dann ebenfalls bei Bedarf für Fehlermeldungen durch die Diagnose-Einrichtung verwendet werden kann. Besonders einfach ist hier ein Überblenden des Wegstreckenzählers mit einer von der Diagnose-Einrichtung erzeugten Service-Codenummer.

Die erfindungsgemäße Diagnose-Einrichtung vermag automatisch zu arbeiten, so dass der Benutzer des Kraftfahrzeugs nicht an eine Aktivierung der Diagnose-Einrichtung in regelmäßigen Abständen denken muss, wenn der Mikroprozessor Mittel zum automatischen Abfragen der Fehlerspeicher hat. Die Diagnose-Einrichtung könnte zum Beispiel durch das Einschalten der Zündung aktiviert werden und danach in regelmäßigen Abständen die Diagnose wiederholen, solange die Zündung eingeschaltet bleibt.

Möglich ist es jedoch auch, dass der Mikroprozessor der Diagnose-Einrichtung mit einer Einrichtung zum manuellen Auslösen der Abfrage der Fehlerspeicher verbunden ist. In einem solchen Fall könnte der Fahrer beispielsweise bei ungewöhnlichen Geräuschen des Fahrzeugs oder im Falle eines Liegenbleibens die Diagnose-Einrichtung aktivieren, um Aufschluss über die Ursache der aufgetretenen Störung zu erhalten. Der Fahrer kann dann beim Anrufen eines Reparaturdienstes diesen zugleich über die Fehlerursache informieren, damit dieser notwendige Reparaturmittel und Ersatzteile mitbringt.

Auch eine Fernüberwachung von Kraftfahrzeugen wird mit der erfindungsgemäßen Diagnose-Einrichtung möglich, wenn gemäß einer anderen vorteilhaften Weiterbildung der Erfindung der Mikroprozessor mit einer Sendeeinrichtung zur Fernübertragung von Fehlermeldungen aufgrund der Abfrage der Fehlerspeicher verbunden ist. Eine solche Diagnose-Einrichtung ermöglicht es einem Reparaturdienst, zu einem reparaturbedürftigen Kraftfahrzeug mit den zur Reparatur erforderlichen Einrichtungen und Teilen zu fahren, ohne dass der Fahrer zuvor mit der Übermittlung von - zudem möglicherweise nur unzureichenden - Fehlermeldungen belästigt wird. Die Sendeeinrichtung könnte z. B. ein mit dem Kombiinstrument verbundenes Mobiltelefon sein. Dieses könnte dann mittels einer Schnittstelle einen Pannendienst anrufen und den Fahrer direkt mit der pannendienstzentrale verbinden.

Ein liegengebliebenes Fahrzeug kann von einer einen Ruf empfangenden Zentrale exakt geortet werden, so dass der jeweils von der Entfernung günstigste Reparaturdienst benachrichtigt werden kann, wenn der Mikroprozessor zur Angabe von Fahrzeugpositionsdaten zusammen mit der Fehlermeldung programmiert ist. Das ist besonders einfach dann möglich, wenn im Fahrzeug ein Navigationssystem vorhanden ist, so daß die Positionsdaten automatisch mitgesendet werden können.

Das zweitgenannte Problem, nämlich die Schaffung eines Verfahrens zur Verminderung des Reparaturaufwandes bei Kraftfahrzeugen, bei welchen ein für ihren weiteren Gebrauch relevanter Fehler aufgetreten ist, wird erfindungsgemäß dadurch gelöst, dass mittels eines in dem Kraftfahrzeug vorhandenen Mikroprozessors Fehlerspeicher von elektronischen Steuerungen und Einrichtungen des Kraftfahrzeugs abgefragt werden und eine Fehlerdiagnose erstellt wird.

Bei einem solchen Verfahren werden Fehler nicht erst in der Werkstatt von Fachleuten mittels eines externen Fehler-Diagnosegerätes festgestellt, vielmehr werden die Fehler mittels einer im Kraftfahrzeug installierten Diagnose-Einrichtung ermittelt und können deshalb beim Rufen eines Reparaturdienstes diesem bereits mitgeteilt werden, so dass der Reparaturdienst schon vor der Abfahrt zu einem liegengebliebenen Kraftfahrzeug entscheiden kann, welche Geräte und Ersatzteile er mitführen muss. Die Informationen können dabei codiert ausgegeben werden, um eine Reparatur von einer nicht autorisierten Werkstatt zu vermeiden bzw. zu verhindern.

Besonders einfach lässt sich das Verfahren durchführen, wenn die Fehlerdiagnose auf einem Bildschirm im Fahrzeugcockpit für den Fahrer sichtbar angezeigt wird.

Der Fahrer eines Kraftfahrzeugs kann die Mittel zur Fehlerdiagnose völlig vergessen und muss auch nicht beim Auftreten eines Fehlers Fehleranzeigen studieren und an eine Zentrale weitergeben, wenn gemäß einer vorteilhaften Weiterbildung des erfindungsgemäßen Verfahrens die Fehlerdiagnose automatisch über Funk einer für die Reparatur zuständigen Zentrale übermittelt wird.

Eine mit einem Kraftfahrzeug kommunizierende Zentrale kann bei einem liegengebliebenen Kraftfahrzeug auch ohne Mithilfe des Fahrers die Position des Kraftfahrzeugs ermitteln, wenn die Fehlerdiagnose zusammen mit Fahrzeugpositionsdaten über Funk der Zentrale übermittelt wird.

Die Erfindung lässt verschiedene Ausführungsformen zu. Zur weiteren Verdeutlichung Ihres Grundprinzips wird nachfolgend auf die Zeichnung Bezug genommen. Diese zeigt in
- Fig. 1: ein Netzwerk eines Kraftfahrzeugs mit der erfindungsgemäßen Diagnose-Einrichtung,
- Fig. 2: ein Blockschaltbild einer Motorsteuerung,
- Fig. 3: einen Ablaufplan für die erfindungsgemäße Diagnose-Einrichtung.

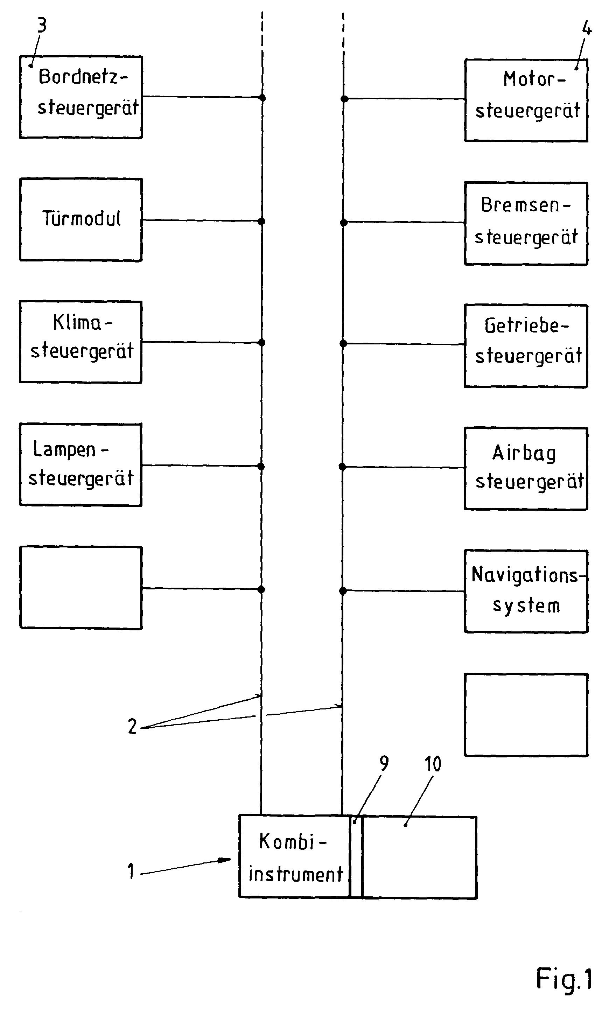

Die Figur 1 zeigt eine als Kombi-Instrument ausgebildete Diagnose-Einrichtung 1, welche an ein Netzwerk 2 eines Kraftfahrzeugs angeschlossen ist. An dieses Netzwerk 2 sind mehrere elektronische Steuerungen 3, 4 angeschlossen, beispielsweise ein Motor-Steuergerät, ein Bremsensteuergerät, ein Getriebesteuergerät und weitere Einrichtungen. Die Diagnose-Einrichtung 1 ist mit einem Mikroprozessor 9 versehen, durch den Fehlermeldungen auf einem Display 10 visualisiert werden können.

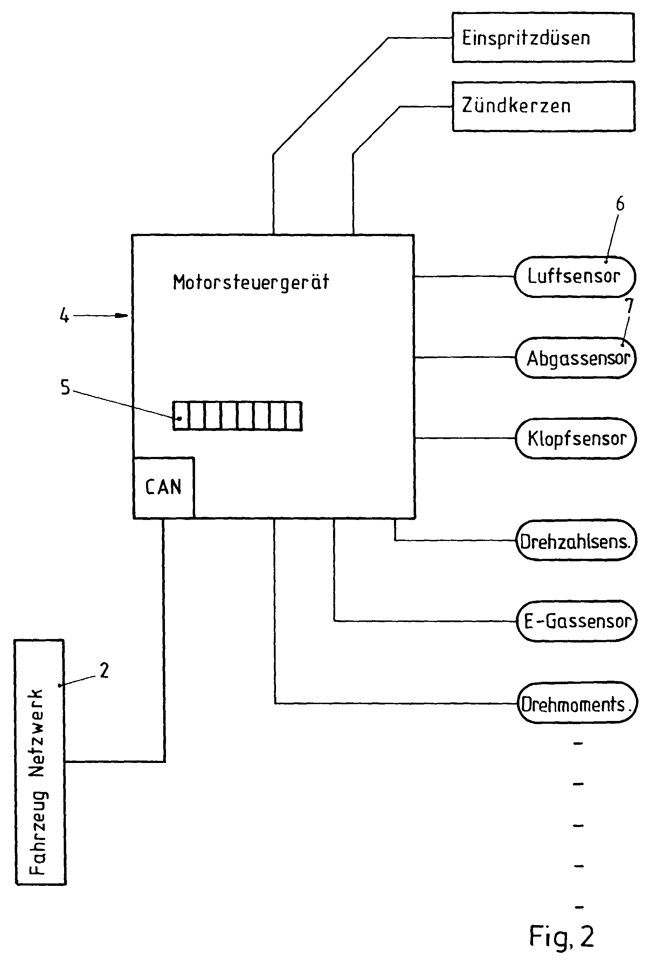

In Figur 2 ist als Steuerung 4 ein Motorsteuergerät als Block dargestellt. Diese Steuerung hat einen Fehlerspeicher 5 und ist an dem Netzwerk 2 angeschlossen. Die Steuerung 4 ist mit verschiedenen Einrichtungen verbunden, beispielsweise einem Luftsensor 6 und einem Abgassensor 7. Tritt ein Fehler auf, so wird dieser von der Steuerung 4 ermittelt und im Fehlerspeicher 5 abgespeichert. Diese Fehlermeldungen können von der in Figur 1 dargestellten Diagnose-Einrichtung ausgelesen und signalisiert werden.

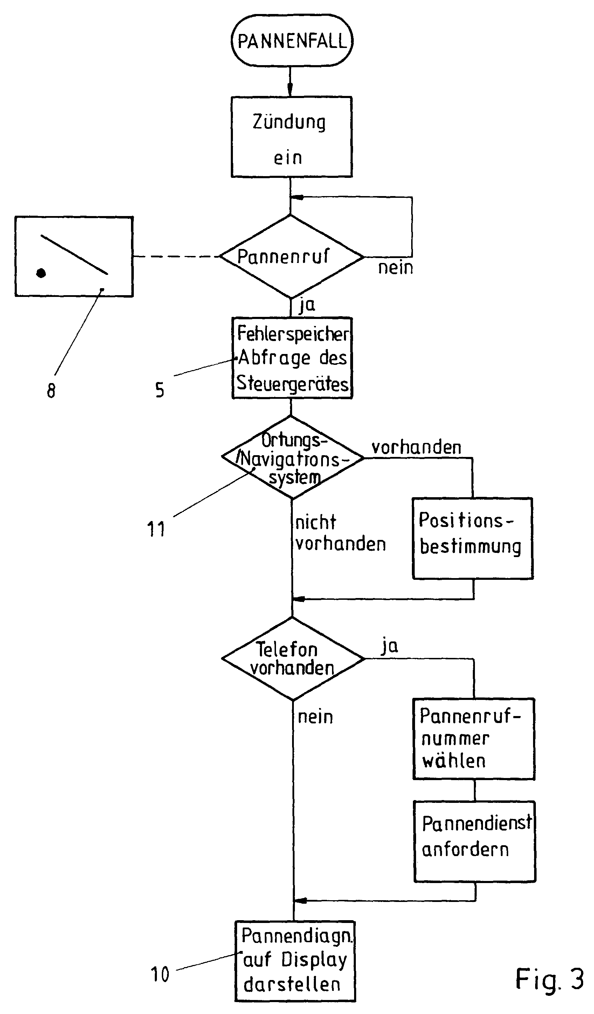

Den Anlauf eines Fehlerfalles veranschaulicht der Anlaufplan gemäß Figur 3. Die Fehlerdiagnose durch Abfrage des Fehlerspeichers 5 erfolgt automatisch beim Einschalten der Zündung oder dadurch, dass der Fahrer eine Notruftaste 8 drückt. Möglich ist es jedoch auch, dass die Fehlerdiagnose ausschließlich durch das Einschalten der Zündung erfolgt und in regelmäßigen Abständen wiederholt wird.

Mittels eines Navigationssystems 11 kann im Falle einer Fehlermeldung eine automatische Positionsbestimmung des Kraftfahrzeugs erfolgen, welche dann vom Fahrer oder automatisch über Funk einer Zentrale übermittelt wird. Der festgestellte Fehler wird auf dem Display 10 dem Fahrer visualisiert.

## Patentansprüche

1. Für ein Kraftfahrzeug bestimmte, einen Mikroprozessor aufweisende Diagnose-Einrichtung, welche zur Anzeige von im Fahrzeug auftretenden Fehlern auf einem Display mit zu überwachenden Bauteilen Verbindung hat, **dadurch gekennzeichnet**, dass der Mikropozessor (9) zum Auslesen von Fehlermeldungen in Fehlerspeichern (5) elektronischer Steuerungen (3, 4) und Einrichtungen des kraftfahrzeugs und zum Erzeugen einer Fehlerdiagnose auf dem Display (10) ausgebildet ist.

2. Diagnose-Einrichtung nach Anspruch 1, **dadurch gekennzeichnet,** dass sie ein die Geschwindigkeitsanzeige aufweisendes Kombi-Instrument ist.

3. Diagnose-Einrichtung nach Anspruch 1 oder 2, **dadurch** gekennzeichnet, dass der Mikroprozessor (9) Mittel zum automatischen Anfragen der Fehlerspeicher (5) hat.

4. Diagnose-Einrichtung nach einem der vorangehenden Ansprüche, **dadurch gekennzeichnet,** dass der Mikroprozessor (9) mit einer Einrichtung zum manuellen Auslösen der Anfrage der Fehlerspeicher (5) verbunden ist.

5. Diagnose-Einrichtung nach einem der vorangehenden Ansprüche, **dadurch gekennzeichnet,** dass der Mikroprozessor (9) mit einer Sendeeinrichtung zur Fernübertragung von Fehlermeldungen aufgrund der Anfrage der Fehlerspeicher (5) verbunden ist.

6. Diagnose-Einrichtung nach einem der vorangehenden Ansprüche, **dadurch gekennzeichnet**, dass der Mikroprozessor (9) zur Abgabe von Fahrzeugpositionsdaten zusammen mit der Fehlermeldung programmiert ist.

7. Verfahren zur Verminderung des Reparaturaufwandes bei Kraftfahrzeugen, bei welchen ein für ihren weiteren Gebrauch relevanter Fehler aufgetreten ist, **dadurch gekennzeichnet**, dass mittels eines in dem Kraftfahrzeug vorhandenen Mikroprozessors Fehlerspeicher von elektronischen Steuerungen und Einrichtungen des Kraftfahrzeugs abgefragt werden und eine Fehlerdiagnose erstellt wird.

8. Verfahren nach Anspruch 7, **dadurch gekennzeichnet,** dass die Fehlerdiagnose auf einem Bildschirm im Fahrzeugcockpit für den Fahrer sichtbar angezeigt wird.

9. Verfahren nach Anspruch 7, **dadurch gekennzeichnet,** dass die Fehlerdiagnose automatisch über Funk einer für die Reparatur zuständigen Zentrale übermittelt wird.

10. Verfahren nach Anspruch 9, **dadurch gekennzeichnet**, dass die Fehlerdiagnose zusammen mit Fahrzeugpositionsdaten über Funk der Zentrale übermittelt wird.
